# EUROPEAN PATENT SPECIFICATION

(11) **EP 3 843 341 B1**
(45) Date of publication and mention of the grant of the patent: **03.07.2024**
(21) Application number: 19889002.2
(22) Date of filing: 27.11.2019
(51) Int. Cl.: H04L 41/5009, H04L 67/51, H04L 67/562, H04L 67/61, H04L 67/55, H04W 28/24

(54) **SELECTION, BY A NETWORK FUNCTION REPOSITORY FUNCTION DEVICE, OF NETWORK FUNCTION SERVICES MEETING MULTIPLE CONDITIONS**
AUSWAHL VON NETZWERKFUNKTIONSDIENSTEN UNTER ERFÜLLUNG MEHRERER BEDINGUNGEN DURCH EINE NETZWERKFUNKTIONSSPEICHERFUNKTIONSVORRICHTUNG
SÉLECTION, PAR UN DISPOSITIF DE FONCTION DE RÉFÉRENTIEL DE FONCTIONS DE RÉSEAU, DE SERVICES DE FONCTIONS DE RÉSEAU RÉPONDANT À DE MULTIPLES CONDITIONS

(30) Priority: 30.11.2018 CN 201811459715
(43) Date of publication of application: 30.06.2021
(73) Proprietor: HUAWEI TECHNOLOGIES CO., LTD., Shenzhen, Guangdong 518129 (CN)
(72) Inventor: XIA, Haiguang, Shenzhen, Guangdong 518129 (CN)
(74) Representative: Epping - Hermann - Fischer
(86) International application number: PCT/CN2019/121123
(87) International publication number: WO 2020/108507

(56) References cited:
- WO-A1-2018/206989
- CN-A- 107 005 431
- CN-A- 107 360 598
- ANONYMOUS: "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.2.0, 19 June 2018 (2018-06-19), pages 1-217, XP051472860, [retrieved on 2018-06-19]
- Anonymous: "3rd Generation Partnership Project; Technical Specification Group Services and System Aspects; System Architecture for the 5G System; Stage 2 (Release 15)", 3GPP Standard; Technical Specification; 3GPP TS 23.501, vol. SA WG2, no. V15.2.0, 19 June 2018 (2018-06-19), pages 1-217, XP051472860,

## Description

### TECHNICAL FIELD

This disclosure relates to the communications field, and in particular, to a method for providing meta data information of a network function service, a network function repository function device, and a computer-readable storage medium.

### BACKGROUND

In a 5G (5^{th} Generation) network architecture, a "network function" (Network Function, NF) is a processing function that is in a network and that is used (or defined) in a 3GPP (3^{rd} Generation Partnership Project, 3rd generation partnership project) specification, and has defined functional behavior and interfaces defined in the 3GPP specification. A network function may be implemented as a network element on dedicated hardware, or may be implemented as an instance of software running on the dedicated hardware, or may be implemented as a virtualization function instantiated on a proper platform (for example, a cloud infrastructure platform). A "network function instance" (Network Function Instance, NFI) is an identifiable instance of an NF. A "network function service" (Network Function service, NFS) is a function exposed by the NF through a service-based interface, and is consumed by another authorized NF. A "network function service instance" (Network Function service instance, NFSI) is an identifiable instance of an NFS.

A core network of a 5G network includes network function devices on a control plane and network function devices on a user plane. The network function devices on the control plane include an AUSF (authentication server function) device, an AMF (access and mobility management function) device, an NEF (network exposure function) device, an NRF (network function repository function) device, an NSSF (Network Slice Selection Function, network slice selection function) device, a PCF (Policy Control Function, policy control function) device, an SMF (session management function) device, a UDM (unified data management) device, an NWDAF (network data analysis function) device, and the like. The network function devices on the user plane include a UPF (user plane function) device, and the like.

The foregoing network function devices provide and access service capabilities through service-oriented interfaces. To be specific, each network function device registers, with the NRF device, profile information of an NFI provided by the network function device, namely, a data structure NFProfile (network function profile) defined in the 3GPP specification 29.510. Each NFprofile contains description information of one or more NFSs, namely, a data structure NFService defined in the 3GPP specification 29.510. A network device to access an NFS may obtain a corresponding NFProfile from the NRF device through query, and then access the NFS based on an NFService (description information of the NFS) in the NFProfile. A device that provides an NFS is referred to as an NFSP (network function service provider) device, and a device that accesses or consumes the NFS is referred to as an NFSC (network function service consumer) device. Each function device on the control plane and each function device on the user plane may be used as NFSP devices to register an NFProfile including NFS information provided by the NFSP devices with the NRF device, or may be used as an NFSC device to obtain, from the NRF device, an NFProfile registered by another NFSP device, to access or consume an NFS contained in the NFprofile.

However, after the NFSC device initiates an NFS query request to the NRF device, the NRF device randomly selects one NFS from a plurality of NFSs that meet a service content condition and provides the NFS to the NFSC device. As a result, the NFSC device finds, after accessing or consuming the NFS, that the NFS can provide a service function corresponding to the service content condition, but service quality of the NFS does not meet a requirement. Therefore, the NFSC device querys and obtains a new NFS. However, a re-obtained NFS may not meet the requirement (because the NRF device still randomly selects an NFS from the plurality of NFSs that meet the service content condition). This greatly reduces efficiency of selecting an NFS by the NFSC device from a network, and also wastes computing resources and network bandwidth of the NRF device.

Document CN 107 360 598 A provides a network fragmentation selection method and device, and relates to the communication technology field. The method comprises: receiving an access request of a terminal performing predetermined business, and determining the service quality performance index information providing the predetermined business; and selecting network fragmentation matching with the service quality performance index information to access the predetermined business. The service quality performance index information is employed to select appropriate network fragmentation for the terminal, and the network fragmentation selected through the mode can satisfy the business service quality requirement so as to ensure the stability of the terminal communication.

### SUMMARY

In view of this, it is necessary to provide a method for providing meta data information of a network function service NFS, to improve efficiency of obtaining the NFS by an NFSC device from a network, and reduce computing resources and network bandwidth of an NRF device. Objects of the present invention are defined in the appended independent claims. Preferred embodiments are covered by the appended dependent claims.

### BRIEF DESCRIPTION OF DRAWINGS

FIG. 1 is a diagram of a system architecture that provides meta data information of an NFS according to an embodiment of this disclosure;
FIG. 2 is a flowchart of a method for providing meta data information of an NFS according to an embodiment of this disclosure;
FIG. 3 is a diagram of another system architecture that provides meta data information of an NFS according to an embodiment of this disclosure;
FIG. 4 is a flowchart of a method for obtaining service quality data of an NFS useful for understanding the invention;
FIG. 5 is a diagram of still another system architecture that provides meta data information of an NFS according to an embodiment of this disclosure;
FIG. 6 is a flowchart of another method for obtaining service quality data of an NFS useful for understanding the invention;
FIG. 7 is a flowchart of still another method for providing meta data information of an NFS according to an embodiment of this disclosure;
FIG. 8 shows still another system architecture for providing meta data information of an NFS according to an embodiment of this disclosure;
FIG. 9 is a flowchart of still another method for providing meta data information of an NFS according to an embodiment of this disclosure;
FIG. 10 is a diagram of still another system architecture that provides meta data information of an NFS according to an embodiment of this disclosure;
FIG. 11 is a diagram of a hardware structure of an NRF device, an NFQC device, an NFMF device, or an NFSC device according to an embodiment of this disclosure;
FIG. 12 is a schematic diagram of a structure of an NRF device according to an embodiment of this disclosure;
FIG. 13 is a schematic diagram of a structure of an NFQC device according to an embodiment of this disclosure;
FIG. 14 is a schematic diagram of a structure of an NFMF device according to an embodiment of this disclosure; and
FIG. 15 is a schematic diagram of a structure of an NFSC device useful for understanding the invention.

### DESCRIPTION OF EMBODIMENTS

The following describes the technical solutions in the embodiments of this disclosure with reference to the accompanying drawings in the embodiments of this disclosure.

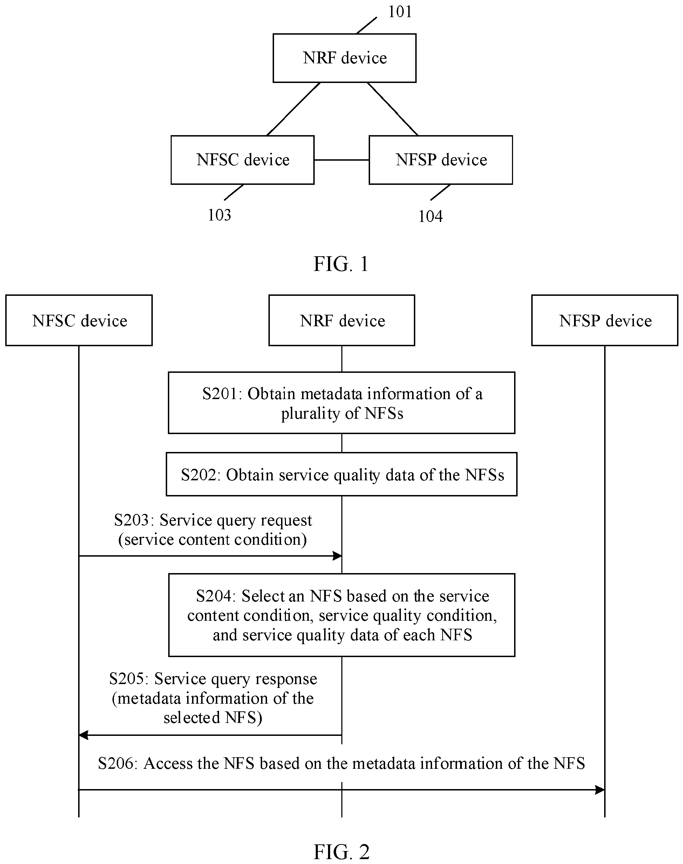

FIG. 1 is a diagram of a system architecture that provides meta data information of an NFS according to an embodiment of this disclosure. The system includes a network repository function (Network Repository Function, NRF) device 101, a network function service consumer (Network Function Service Consumer, NFSC) device 103, and a network function service provider (Network Function Service Provider, NFSP) device 104. FIG. 1 includes only one NFSC device and one NFSP device. However, it should be understood that, depending on a requirement of a subsequent embodiment of this disclosure and a requirement of an actual product, the architecture shown in FIG. 1 may include a plurality of NFSC devices and a plurality of NFSP devices. Quantities of NFSC devices and NFSP devices are not limited in this embodiment of this disclosure.

For ease of description, in the embodiments of this disclosure, the "network function repository function device" is referred to as an "NRF device", the "network function service consumer device" is referred to as an "NFSC device", and the "network function service provider device" is referred to as an "NFSP device". Main functions of the NRF device, the NFSC device, and the NFSP device are described as follows.

The NFSC device 103 may provide the NRF device 101 with service quality data of an accessed NFS, query the NRF for the NFS, and access or consume the NFS.

It should be understood that an actual physical device on which the NFSC device is deployed is not limited in this embodiment of this disclosure.

The NFSP device 104 may register meta data information that is of an NFS and that is provided by the NFSP device 104 with the NRF device 101, so that another NFSC device (for example, the NFSC device 103) queries and accesses or consumes the meta data information of the NFS.

It should be understood that an actual physical device on which the NFSP device is deployed is not limited in this embodiment of this disclosure.

The NRF device 101 may provide an NFS registration service for an NFSP device (for example, the NFSP device 104)

(including receiving meta data information that is of an NFS and that is sent by the NFSP device), and provide an NFS query service for an NFSC device (for example, the NFSC device 103) (including sending meta data information of an NFS required by the NFSC device). To better provide a query service for the NFSC device, the NRF device 101 obtains service quality data of all registered NFSs, to provide the NFSC device with meta data information of an NFS that meets a service quality condition. The service quality condition is provided by another device. This is further described in subsequent embodiments of this disclosure.

It should be understood that an actual physical device on which the NRF device is deployed is not limited in this embodiment of this disclosure.

For ease of understanding of subsequent examples of this disclosure, the following further explains several concepts related to an NFS.
(1) Meta data information of the NFS refers to a set of attribute information that describes the NFS or a set of attribute information that describes an NFI (network function instance) that provides the NFS. The meta data information includes related information required for using (in the embodiments of this disclosure, "access", "consumption", or "invoking" of the NFS is equivalent to or similar to "use", and all refer to using a service corresponding to the NFS) the NFS, for example, a protocol name, an IP address (or a fully qualified domain name) of the NFS or an IP address (or a fully qualified domain name) of an NFSP device that provides the NFS, port information, and path information. Meta data information of one NFS may be an NFProfile data structure defined in the 3GPP specification 29.510 (providing profile information of a network function instance NFI of the NFS). The meta data information includes a plurality of NFService data structures, and each NFService includes a plurality of pieces of description information of one NFS, or may alternatively be the NFService data structure only. The NFProfile data structure may include but is not limited to fields shown in Table 1, and NFService data may include but is not limited to fields shown in Table 2.

**Table 1**

| Attribute name | Description |
|---|---|
| nflnstanceID | An identifier of an NF instance. |
| nfType | A type of an NF |
| nfStatus | A state of the NF instance |
| plmn | A PLMN (public land mobile network) of the NF |
| sNssais | S-NSSAIs (single network slice selection assistance information) of the NF |
| nsiList | A list of network slice instance identifiers of the NF |
| fqdn | An FQDN (fully qualified domain name) of the NF |
| interPlmnFqdn | An inter-PLMN FQDN: To enable one NFS to be discovered by other PLMNs, an FQDN (see the 3GPP specification 23.003) for inter-PLMN routing to be registered with the NRF device. |
| ipv4Addresses | An IP (Internet Protocol) v4 address of one or more NFs |
| ipv6Addresses | An IPv6 address of one or more NFs |
| nfServices | A list of network function service instances, including a plurality of NFServices listed in Table 2 |

**Table 2**

| Attribute name | Description |
|---|---|
| serviceInstanceID | An identifier of a given network function instance. |
| serviceName | A service name (for example, nudm-sdm) |
| version | A service version (for example, v1) |
| schema | A protocol name (for example, "http" or "https") |
| fqdn | Fully qualified domain name of a hosting service. |
| interPlmnFqdn | An inter-PLMN FQDN: To enable one NFS to be discovered by other PLMNs, an FQDN is required for inter-PLMN routing. For details, see the 3GPP specification 23.003. |
| ipEndPoints | An IP address and port information (including IPv4 and/or IPv6 addresses) of one or more NFs are used to listen to incoming service requests. |
| apiPrefix | An optional path part is used to construct an {apiRoot} variable of URIs (Uniform Resource Identifier) of different APIs (application programming interface). For details, refer to the 3GPP specification 29.501. |
| defaultNotificationSubscriptio ns | Notification endpoints of different notification types. |
| allowedPlmns | APLMN that is allowed to access the service. |
| allowedNfTypes | A type that is of a network function device and that is allowed to access the service. |
| allowedNssais | NSSAI that is of a network slice and that is allowed to access the service |
| capacity | Static capability information indicates a weight relative to another service of a same type. |
| supportedFeatures | Supported service features. |

However, it should be understood that the NFProfile and the NF Service are merely example representation forms of the meta data information of the NFS. The representation forms of the meta data information of the NFS and the included fields are not limited in this embodiment of this disclosure, provided that a set of attribute information that describes the NFS or a set of attribute information that describes anNFI that provides the NFS is included. For example, as another representation form of the NFS, only an access protocol, the IP address or the fully qualified domain name, a port number, and the path information (similar to the foregoing apiPrefix field) may be included. An NFS consumer (the NFSC device) may form, based on these fields, a URI using the NFS. The access protocol, and the IP address or the fully qualified domain name are mandatory, and the port number is optional. If the port number is not displayed or provided, a default port number can be used, for example, an "80" port. The path information is optional. If the path information is not displayed or provided, a default path can be used, for example, a root path "/".
(2) A service content condition of the NFS is used to describe a requirement of the NFSC device for service content of a required NFS, and is a filtering condition used by the NRF device to search for or select an NFS. For example, because the service name and the supported features may reflect the service content of the NFS, the NFSC device may send "serviceName = nudm-*" as the service content condition to the NRF device, so that the NRF device may select all NFSs whose service names start with "nudm-" and sends the NFSs to the NFSC device. Alternatively, the NFSC device may send "supportedFeatures=*nscf*" as the service content condition to the NRF device, so that the NRF device may select all NFSs whose supported features include "nscf" and send the NFSs to the NFSC device. The foregoing representation manner of the service content condition is merely an example, and the representation manner of the service content condition is not limited in this embodiment of this disclosure.
(3) Service quality data of the NFS refers to quality data that can be reflected or obtained by a consumer (the NFSC device) side when an NFI provides a service corresponding to the NFS. The service quality data includes but is not limited to time required for the NFS to complete the service, a success rate of the NFS to complete the service, a peak service volume of the NFS, and the like. The service quality data of the NFS may be service quality sample data, or may be service quality statistical data.
(4) The service quality sample data of the NFS refers to service quality data that is of the NFS and that is obtained or detected by an NFSC device after accessing or consuming the NFS. The service quality sample data includes but is not limited to time consumed by the NFS to complete the service, and a result (success or failure) of the NFS to complete the service. Therefore, the service quality sample data of the NFS may be a consumption record or a consumption usage status recorded by the NFSC device serving as the NFS consumer.
(5) The service quality statistical data of the NFS refers to service quality data obtained by collecting statistics on a plurality of pieces of service quality sample data of a same NFS. For example, based on consumed time and execution results fed back by a plurality of NFSC devices, statistics may be collected on average consumption time (total time/total access or consumption times) and an average success rate (total success times/total access or consumption times) of an NFS to complete the service. It should be understood that the service quality data may be service quality statistical data, or may be service quality sample data that is obtained without statistics collection, for example, a peak service volume of the NFS.
(6) A service quality condition of the NFS is used to describe a requirement of an NFSC device or another device for service quality of the NFS, and is a factor that is referenced by the NRF device or the another device to search for or select an NFS. The factor is related to but is not limited to an average consumption time requirement and/or an average success rate of the NFS to complete the service.

Optionally, the service quality condition may be a service quality selection policy. The service quality selection policy includes a service quality factor that is preferentially referenced when an NFS is selected, for example, "high average success rate first", which indicates that an NFS with a high average success rate is preferentially selected under a same condition, and for another example, "low average consumption time first", which indicates an NFS with low average consumption time is preferentially selected under a same condition. Herein, a representation manner of the service quality selection policy is merely an example, and the representation manner of a service quality policy is not limited in this embodiment of this disclosure.

Optionally, the service quality condition may also be a service quality constraint condition, used to describe a condition that service quality data of a target NFS meets. For example, one service quality condition may be "averageCostTime<200 ms", which indicates that an NFS whose average consumption time is less than 200 ms is required; and the other service quality condition may be "averageSucRate>95%", which indicates that an NFS whose average success rate is greater than 95% is required. The foregoing representation manner of the service quality condition is merely an example, and the representation manner of the service quality condition is not limited in this embodiment of this disclosure.

To improve efficiency of obtaining the meta data information of the NFS by the NFSC device 103, the NRF device 101 obtains the service quality condition and service quality data of each registered NFS, selects at least one NFS based on the service quality condition, the service quality data of each registered NFS, and the service content condition provided by the NFSC device 103, and sends meta data information of the selected NFS to the NFSC device 103, so that the NFSC device 103 accesses or consumes the selected NFS based on the meta data information of the selected NFS. In comparison, this manner of providing the meta data information of the NFS can better meet a requirement of the NFSC device 103, reduce a quantity of times querying the NFS by the NFSC device 103, improve efficiency of obtaining and accessing the NFS by the NFSC device 103, and reduce computing resources and network bandwidth of the NRF device 101. For details, further refer to subsequent embodiments in this disclosure.

FIG. 2 is a flowchart of a method for providing meta data information of an NFS according to an embodiment of this disclosure. The method procedure may be implemented based on the architecture in FIG. 1. An NFSC device corresponds to the NFSC device 103 in FIG. 1, an NRF device corresponds to the NRF device 101 in FIG. 1, and an NFSP device corresponds to the NFSP device 104 in FIG. 1. The method procedure specifically includes the following steps.

Step 201: The NRF device obtains meta data information of a plurality of NFSs.

Specifically, the NRF device obtains the meta data information of the plurality of NFSs from the NFSP device. The NRF device may obtain the meta data information of the NFSs from a registration request by receiving the registration request sent by the NFSP device. The NRF device may receive the meta data information of the plurality of NFSs from a single NFSP device or a plurality of NFSP devices.

Specifically, the meta data information of the NFSs may be an NFProfile provided by a corresponding NFSP device. Optionally, the NRF device may store the meta data information of the plurality of NFSs, so that the NFSC device uses the meta data information when subsequently querying a service from the NRF device.

Step 202: The NRF device obtains service quality data of the NFSs.

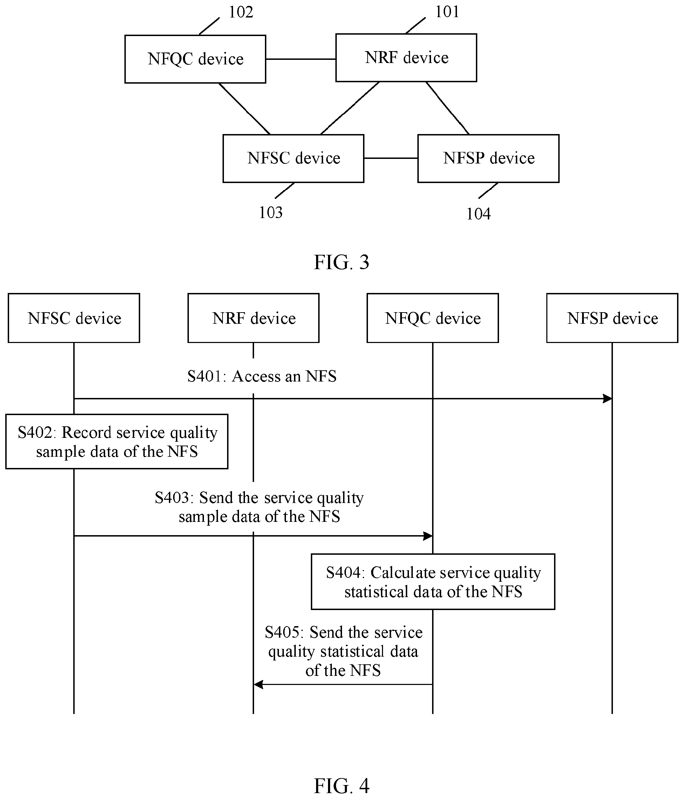

Optionally, the NRF device may obtain service quality data of each NFS from an NFQC (network function quality collector) device (for ease of description, the "network function quality collector device" is referred to as an "NFQC device" for short in this embodiment of this disclosure). Optionally, the NFQC device may be an NWDAF device in a 3GPP specification. For details, further refer to embodiments corresponding to FIG. 3 and FIG. 4.

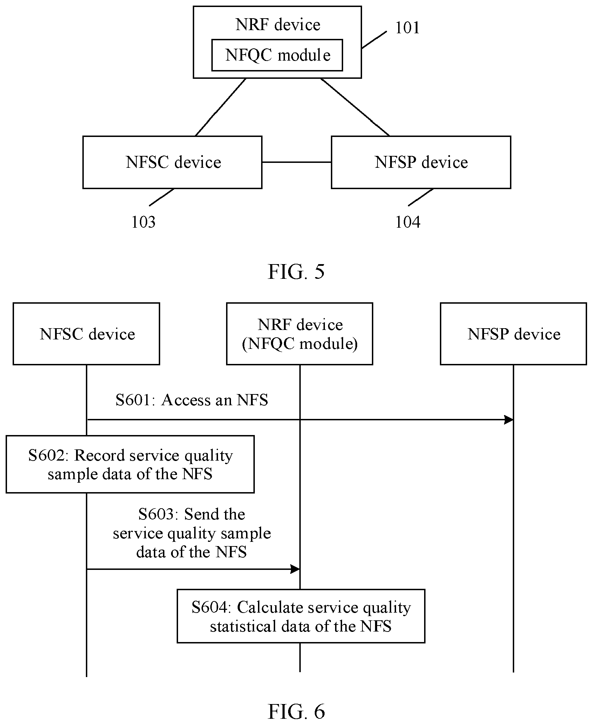

Optionally, the NRF device may also include a module having a function of the NFQC device, to obtain the service quality data. For details, further refer to embodiments corresponding to FIG. 5 and FIG. 6.

In the prior art, the NRF device obtains only the meta data information of each NFS in the step 201, but does not obtain the service quality data. Therefore, the NRF device can only randomly select an NFS from NFSs that meet a service content condition and return the NFS to the NFSC device. However, in this step, the NRF device obtains the service quality data of each NFS. Therefore, when providing the meta data information of the NFSs for the NFSC device, the NRF device may further select an NFS for the NFSC device with reference to the service quality data of each NFS. This helps improve efficiency of obtaining the NFS by the NFSC device. A manner in which the NRF device obtains the service quality data of the NFS is further described in subsequent embodiments of this disclosure. Step 203: The NFSC device sends a service query request to the NRF device, where the service query request includes the service content condition.

Specifically, the NFSC device may send a service query request to the NRF device, the service query request includes the service content condition, and the service content condition is used to describe a requirement of the NFSC device for service content of a required NFS.

Specifically, the service query request may be a service discovery request (service discovery request), or may be a service acquire request (service acquire request), or may be a service subscription request (service subscription request), and both of them carry the service content condition. A form of a message used by the NFSC device to send the service content condition to the NRF device is not limited in this embodiment of this disclosure.

Step 204: The NRF device selects an NFS based on the service content condition, a service quality condition, and the service quality data of each NFS.

After receiving the service query request, the NRF device parses the service query request, obtains the service content condition and the like from the service query request, and further selects the NFS for the NFSC device based on the service content condition. To improve efficiency of obtaining the NFS by the NFSC device, the NRF device may further select the NFS for the NFSC device based on the service quality condition, so that the selected NFS can more easily meet the requirement of the NFSC device on the service quality. Therefore, the NRF device obtains the service quality condition.

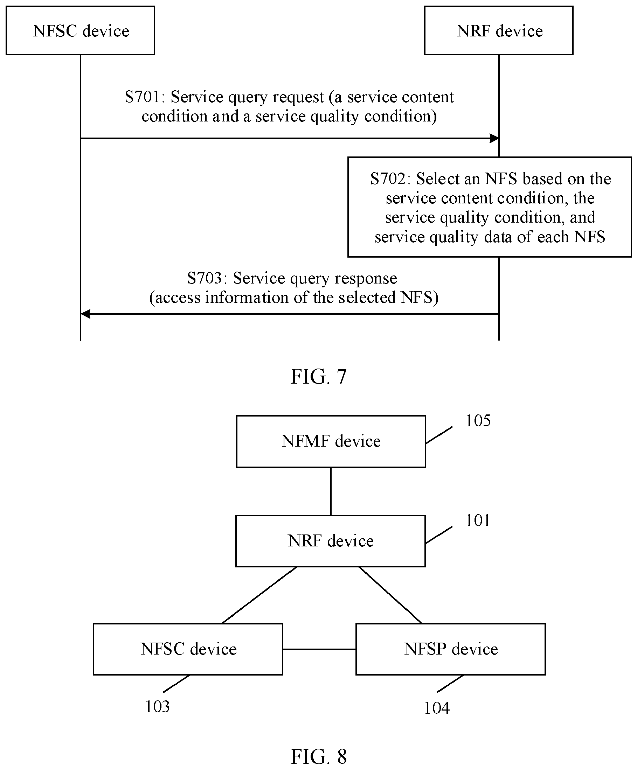

In the step 203, in addition to the service content condition, the service query request may further include the service quality condition. The NRF device obtains the service quality condition from the service query request sent by the NFSC device. For a specific process of obtaining the service quality condition, further refer to an embodiment corresponding to FIG. 7.

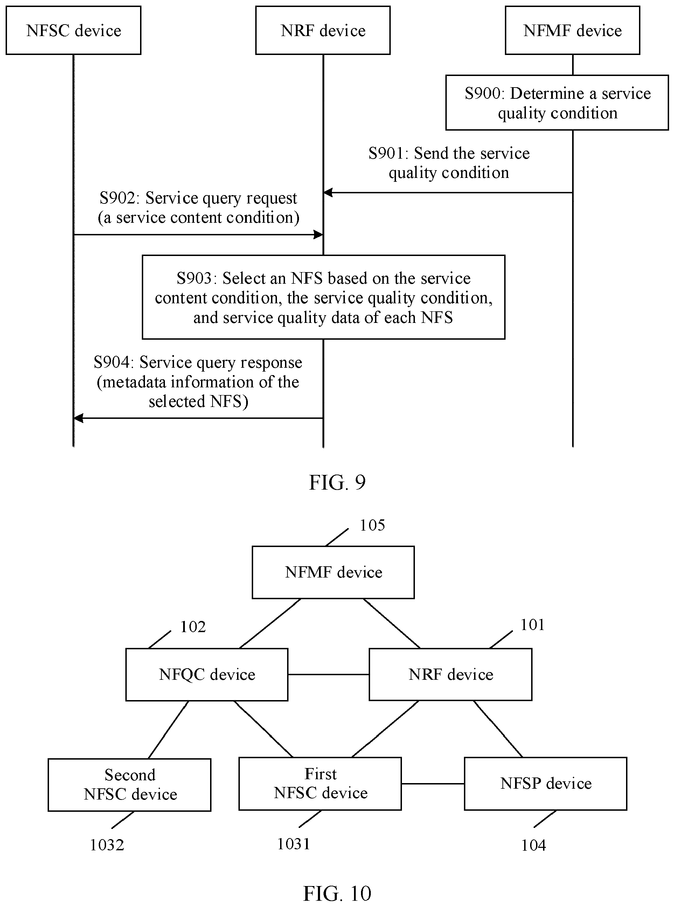

The NRF device may alternatively obtain the service quality condition from a network function management function (Network Function Management Function, NFMF) device (for ease of description, the "network function management function device" is referred to as an "NFMF device" for short in this embodiment of this disclosure). In this way, the NRF device may obtain the service quality condition after receiving the service query request, or may obtain the service quality condition before receiving the service query request. For a specific process of obtaining the service quality condition, further refer to embodiments corresponding to FIG. 8 and FIG. 9.

It is assumed that there are m NFSs in the step 201, and m is a positive integer. Based on different service quality conditions, a manner in which the NRF device selects the NFS may be as follows.
(1) If the service quality condition is the service quality selection policy, the NRF device may select the NFS in the following manner.

The NRF device selects x NFSs from the m NFSs, network function services provided by the x NFSs meet the service content condition, and x is a positive integer not greater than m.

The NRF device selects n NFSs from the x NFSs based on a service quality factor that is included in the service quality selection policy and that is preferentially referenced. For example, if the service quality selection policy includes "high average success rate first", top n NFSs whose average success rates are sorted in descending order are selected from the x NFSs, or if the service quality selection policy includes "low average consumption time first", last n NFSs whose average consumption time is in descending order are selected from the x NFSs.

(2) If the service quality condition is the service quality constraint condition, the NRF device may select the NFS in the following manner.

The NRF device selects n NFSs from the m NFSs, the n NFSs meet the service content condition, service quality data of the n NFSs meets the service quality constraint condition, and n is a positive integer not greater than m. For example, if the service content condition is "serviceName=nudm-*", and the service quality constraint condition is "averageSucRate>95%", service names of the n NFSs all start with "nudm-", and average success rates are all greater than 95%.

(3) If the service quality condition is the service quality constraint condition, the NRF device may alternatively select the NFS in the following manner.

The NRF device selects y NFSs from the m NFSs, network function services provided by the y NFSs meet the service content condition, and y is a positive integer not greater than m.

The NRF device selects n NFSs from the y NFSs based on the service quality constraint condition. For example, the service quality constraint condition is "average consumption time<100 ms", and if average consumption time of the n NFSs in the y NFSs is less than 100 ms, the n NFSs are selected. However, if average consumption time of the y NFSs is greater than 100 ms, no selection may be made, and consequently, the NFS obtained by the NFSC device is an empty set. In this case, the NFSC device or the NFMF device may adjust the service quality condition based on a situation, for example, reduce the service quality constraint condition, and change the service quality constraint condition to "average consumption time<200 ms".

Step 205: The NRF device returns a service query response to the NFSC device, where the service query response includes the meta data information of the selected NFS.

Specifically, the NRF device may construct the service query response, where the service query response includes an NFService data structure of the selected NFS, or includes an NFProfile data structure (the NFProfile data structure includes an NFProfile data structure of the NFS), and send the service quality query response to the NFSC device. Specifically, the service query response may be a service discovery response (service discovery response), or may be a service acquire response (service acquire response), or may be a service subscription notification (service subscription notification), and both of them carry the meta data information of the selected NFS in the step 204. A form of a message used by the NRF device to return the meta data information of the NFS to the NFSC device is not limited in this embodiment of this disclosure.

Step 206: The NFSC device accesses the NFS based on the meta data information of the NFS.

Specifically, the NFSC device receives the service query response, and obtains meta data information of one or more NFSs from the service query response. If there is meta data information of one NFS, the NFSC device may access, based on the meta data information of the NFS, an NFS provided by a corresponding NFSP device. If there is meta data information of the plurality of NFSs, the NFSC device may further select meta data information of one NFS from the meta data information of the plurality of NFSs according to a local selection policy.

Specifically, the NFSC device may parse out an NFProfile from the received service query response, parse out an NFService from the NFProfile, form a URI based on information such as a protocol, an IP address, a port number, and a path part in the NFProfile and/or the NFService, and access a corresponding NFS through the URI.

Compared with a conventional method for selecting and providing an NFS only based on the service content condition, the method for providing meta data information of an NFS corresponding to FIG. 2 may further select and provide the NFS in combination with the service quality condition and the service quality data. This helps the NFSC device obtain the NFS that meets a service quality requirement as soon as possible, reduces a quantity of times of querying the NFS by the NFSC device, improves efficiency of obtaining and accessing the NFS, and reduces computing resources and network bandwidth of the NRF device.

FIG. 3 is a diagram of another system architecture that provides meta data information of an NFS according to an embodiment of this disclosure. Based on FIG. 1, an NFQC device 102 is added to the architecture. The NFQC device is configured to obtain service quality data of each NFS, for example, obtain, from a plurality of NFSC devices (for example, an NFSC device 103), service quality sample data of each NFS that the plurality of NFSC devices access, perform statistics collection based on the service quality sample data provided by the plurality of NFSC devices (including the NFSC device 103), to obtain service quality statistical data of each NFS, and provide the service quality statistical data of each NFS for an NRF device (for details, refer to a method procedure corresponding to FIG. 4). In this way, the NRF device may select meta data information of an NFS according to the method procedure corresponding to FIG. 2. Certainly, for some service quality data, for example, a peak quantity of online users of an NFS, the NFQC device 102 may directly send the service quality data to the NRF device without performing statistics collection. Optionally, the NFQC device 102 may be an NWDAF device. A physical device on which the NFQC device 102 is actually deployed is not limited in this embodiment of this disclosure.

FIG. 4 is a flowchart of a method for obtaining service quality data of an NFS. The method procedure may be implemented based on the system architecture shown in FIG. 3. An NFSC device corresponds to the NFSC device 103 in FIG. 3, an NRF device corresponds to the NRF device 101 in FIG. 3, an NFQC device corresponds to the NFQC device 102 in FIG. 3, and an NFSP device corresponds to the NFSP device 104 in FIG. 3. In the method procedure, the NFQC device is responsible for collecting and performing statistics on service quality sample data of an NFS, and sending service quality statistical data to the NRF device, so that the NRF device may select an NFS based on the service quality data. The method specifically includes the following steps.

Step 401: The NFSC device accesses an NFS.

Specifically, the NFSC device accesses or consumes the NFS based on obtained meta data information (for example, obtained by querying the NRF device) of the NFS, for example, sends a service-related message and a parameter to a service-oriented interface of the NFS.

Step 402: The NFSC device records service quality sample data of the NFS.

Specifically, the NFSC device records the service quality sample data of the NFS that is accessed or consumed by the NFSC device. The sample data includes but is not limited to a service identifier of the NFS, consumption time (for example, a quantity of milliseconds, or an execution start moment and an execution end moment, and consumption time subsequently calculated based on the quantity of milliseconds or the execution start moment and the execution end moment) in a process in which the NFS provides a service, and an execution result (success or failure).

Step 403: The NFSC device sends the service quality sample data of the NFS to the NFQC device.

Specifically, the NFSC device may construct a service quality response (service quality response) message, a service quality update request (service quality update request) message, a service quality push request (service quality push request) message, or a service quality subscription notification (service quality subscription notification) message, and the message includes the service quality sample data. A form of a message used by the NFSC device to send the service quality sample data of the NFS to the NFQC device is not limited in this embodiment of this disclosure. Optionally, before this step, the NFQC device may send a service quality request (service quality request) message (namely, a request message corresponding to the service quality response message), a service quality subscription request (service quality subscription request) message (namely, the service quality update request message, the service quality push request message, or a subscription request message corresponding to the service quality subscription notification message) to the NFSC device, to indicate the NFSC device to provide the service quality data for the NFQC device. Optionally, the NFQC device may periodically send the service quality request message to the NFSC device. Optionally, the service quality request message or the service quality subscription request message may carry an identifier of an NFS (to indicate the NFSC device to provide service quality data of the NFS corresponding to the identifier), or may not carry an identifier an NFS (to indicate the NFSC device to provide service quality data of all NFSs accessed or consumed by the NFSC device). The identifier of the NFS may be a result obtained by combining an nflnstanceID field in an NFProfile data structure and a servicelnstancelD field in an NFService data structure (for example, a character string connection), or may be other information that can uniquely identify the NFS. Optionally, the service quality subscription request message may further include notification address information, and the notification address information is used by the NFSC device to send a subscription notification message that includes the service quality sample data to the NFQC device.

Step 404: The NFQC device calculates service quality statistical data of the NFS.

According to the method described in the step 403, for each NFS, the NFQC device may receive one or more (for example, s) pieces of service quality sample data from each of a plurality of (for example, a) NFSC devices, to obtain a*s pieces of service quality sample data. In this way, the NFQC device may obtain, through statistics collection based on the a*s pieces of service quality sample data, service quality statistical data (for example, calculating an average value, and collecting statistics on an average success rate) of the NFSs. For example, for an NFS, service quality sample data sent by two NFSC devices is respectively "consumption time=100 ms" and "consumption time=80 ms". Therefore, it may be obtained that service quality statistical data is "average consumption time=90 ms" (that is, (100+80)/2=90). For an NFS, service quality sample data sent by three NFS devices is "execution result=success", "execution result=failure", and "execution result=failure". Therefore, it may be calculated that service quality statistical data is "average success rate=33%" (that is, 1/(1+1+1)=1/3). Alternatively, the NFQC device may use another statistics collection manner. For example, when average consumption time information is calculated, a time period in which a service is consumed may be considered, different weights are set for different time periods in a day, and then weighted averaging is performed based on the weights. A statistics collection method of the NFQC device is not limited in this embodiment of this disclosure.

Optionally, the NFQC device may store service quality statistical data of each NFS and an identifier of the NFS in a corresponding manner, so that the NFQC device provides the service quality statistical data to the NRF device at a request of the NRF device or actively provides the service quality statistical data to the NRF device in a subsequent process.

Step 405: The NFQC device sends the service quality statistical data of the NFS to the NRF device.

Based on obtaining the service quality statistical data of each NFS in the step 404, the NFQC device may send the service quality statistical data of each NFS to the NRF device.

Optionally, the NFQC device may periodically send the service quality statistical data of the NFS to the NRF device. For example, the NRF device may send, to the NFQC device before the step 405, a subscription request about service quality statistical data of one or more NFSs, namely, a service quality statistical data subscription request, and the subscription request may include an identifier of the one or more NFSs, so that the NFQC device allocates a subscription resource (including but not limited to a task that is periodically executed, a CPU resource, a memory resource, or the like) to the one or more NFSs. Optionally, the subscription request message of the service quality statistical data may further include notification address information, and the notification address information is used for the NFQC device to send a subscription notification message including the service quality statistical data to the NFSC device. Once the NFQC device determines that the service quality statistical data of the one or more NFSs are changed, the NFQC device sends a service quality statistical data subscription notification to the NRF device, and the changed service quality statistical data of the one or more NFSs are included in the subscription notification. In this way, the NFQC device may periodically send the service quality statistical data to the NRF device for a plurality of times. This manner helps the NRF device obtain latest service quality statistical data of each NFS in a timelier manner, to help improve efficiency of obtaining the NFS by the NFSC device.

Optionally, the NFQC device may also return the service quality statistical data of the NFS at a request of the NRF device. For example, the NRF device may send a service quality statistical data request to the NFQC device before the step 405 (for example, after the NRF device receives a service query request of an NFS device), and the request includes the identifier of the one or more NFSs. After receiving the request, the NFQC device parses out the identifier of the one or more NFSs in the request, reads service quality statistical data corresponding to the identifier of the one or more NFSs, and sends the corresponding service quality statistical data to the NRF device.

Optionally, regardless of whether the NFQC device sends the service quality statistical data of the NFS periodically or at the request of the NRF device, the NFQC device may send the service quality statistical data of the NFS to the NRF device once finding that the service quality statistical data of the NFS changes (in this way, the NRF device can obtain the service quality statistical data of the corresponding NFS in a more timely manner). Alternatively, the NFQC device may send service quality statistical data of a plurality of NFSs to the NRF device at a time (in this way, a quantity of times of interaction between the NFQC device and the NRF device may be reduced).

It should be understood that, for the step 404 and the step 405, for some service quality data, for example, a peak quantity of online users of the NFS, the NFQC device may directly send the service quality data to the NRF device without performing statistics collection (in other words, skip the step 404) and directly send the service quality data to the NRF device (perform the step 405).

According to the method for obtaining service quality statistical data of an NFS corresponding to FIG. 4, the NFQC device is responsible for collecting and collecting statistics on the service quality sample data of the NFS. This helps reduce calculation load of an NRF device, and also helps perform service quality-related services in the NFQC device in a centralized manner.

In addition to obtaining the service quality statistical data from the NFQC device, the NRF device may alternatively obtain the service quality statistical data of each NFS by the NRF device. Therefore, an embodiment of this disclosure provides a diagram of another system architecture for providing meta data information of an NFS. As shown in FIG. 5, the architecture is implemented based on the architecture shown in FIG. 1. In other words, an NFQC module is added to the NRF device. A function of the NFQC module is similar to that of the NFQC device 102 in FIG. 3 or FIG. 4, and is used to enable the NRF device to have a function of obtaining service quality data of each NFS, so that the NRF device can select the meta data information of the NFS according to the method procedure corresponding to FIG. 2. In this case, the NRF device deployed with the NFQC module may also be considered as an NFQC device.

FIG. 6 is a flowchart of another method for obtaining service quality data of an NFS according to an embodiment of this disclosure. The method procedure may be implemented based on the architecture shown in FIG. 5. An NFSC device corresponds to the NFSC device 103 in FIG. 5, and an NRF device corresponds to the NRF device 101 in FIG. 5. A function of an NFQC module is similar to that of the NFQC device 102 in FIG. 3, and an NFSP device corresponds to the NFSP device 104 in FIG. 5. In the method procedure, the NFQC module in the NRF device 101 is responsible for collecting and collecting statistics about service quality sample data of an NFS, so that the NRF device can select an NFS based on service quality statistical data. Steps 601 to 604 are similar to the steps 401 to 404, and details are not described herein again. Because the NFQC module is deployed inside the NRF device, a corresponding step in the step 405 in FIG. 4 may be omitted. For service quality data (the service quality sample data or the service quality statistical data) obtained in the step 603 or obtained through statistics collection in the step 604, the NFQC module may only store the service quality data, but does not send the service quality data. Certainly, the service quality data may also be transferred through an internal interface of the NRF device, so that a module that is of the NRF device and that performs an NFS query function obtains the service quality data.

After the NRF device obtains the service quality statistical data of the NFS by using the method in the foregoing embodiment, to make a selection from a plurality of NFSs that meet a service content condition, further reference is made to a service quality condition, and the service quality condition may be obtained from the NFSC device, or may be obtained from an NFMF device. The following provides further descriptions by using embodiments. Considering that each NFSC device may have a personalized requirement for a service quality condition of an NFS, an embodiment of this disclosure provides another method procedure for providing meta data information of an NFS, as shown in FIG. 7. The method procedure may be implemented based on the architecture shown in FIG. 1, FIG. 3, or FIG. 5. An NFSC device corresponds to the NFSC device 103 in FIG. 1, FIG. 3, or FIG. 5, and an NRF device corresponds to the NRF device 101 in FIG. 1, FIG. 3, or FIG. 5. On a basis that the NRF device has obtained service quality data of each NFS, the method procedure specifically includes the following steps.

Step 701: The NFSC device sends a service query request to the NRF device, where the service query request includes a service content condition and a service quality condition.

On a basis of the step 203, transmission of the service quality condition is added in this step. In other words, in addition to the service content condition, the service query request sent by the NFSC device further includes the service quality condition. The service quality condition may be the foregoing service quality constraint condition, or may be a service quality selection policy.

Considering a requirement of the NFSC device to select one NFS to use the NFS, the service quality selection policy may be a policy in a form of "select one", for example, "high average success rate first, TOP 1" (indicating that an NFS with a highest average success rate is selected) and "low average consumption time first, BOTTOM 1" (indicating that an NFS with lowest average consumption time is selected.) Certainly, the service quality selection policy may also be a policy in a form of "non-select one", for example, "high average success rate first, TOP 3" (indicating that top three NFSs whose average success rates are sorted in descending order are selected) or "low average consumption time first, BOTTOM 2" (indicating that last two NFSs whose average consumption time is sorted in descending). Step 702: The NRF device selects the NFS based on the service content condition, the service quality condition, and service quality statistical data of each NFS.

This step is similar to the step 204. It should be noted that, when the service quality condition is the service quality selection policy in the form of "select one", the NRF device may correspondingly select meta data information of a single NFS and return the meta data information to the NFSC device. However, when the service quality condition is the service quality selection policy in the form of "non-select one", the NRF device may correspondingly select meta data information of a plurality of NFSs and return the meta data information to the NFSC device, so that the NFSC device selects (for example, according to a locally preset selection policy) meta data information of one NFS from the meta data information of the plurality of NFSs.

Step 703: The NRF device returns a service query response to the NFSC device, where the service query response includes the meta data information of the selected NFS.

This step is similar to the step 205.

Subsequent operations of the NFSC device are similar to those in the step 206 and the like.

Considering that an operator or maintenance personnel may have a unified requirement for the service quality condition of the NFS, an embodiment of this disclosure provides still another system architecture for providing meta data information of an NFS, as shown in FIG. 8. The architecture is implemented based on the architecture shown in FIG. 1, FIG. 3, or FIG. 5. In other words, an NFMF device 105 is added on a basis of FIG. 1, FIG. 3, or FIG. 5. An operator or maintenance personnel may set a service quality condition by using the NFMF device 105, and the NFMF device 105 sends the set service quality condition to the NRF device 101, so that the NRF device 101 may select the meta data information of the NFS according to the method procedure corresponding to FIG. 2. A physical device on which the NFMF device is deployed is not limited in this embodiment of this disclosure. For example, the NFMF device may alternatively be deployed on an NWDAF device.

FIG. 9 is a flowchart of still another method for providing meta data information of an NFS according to an embodiment of this disclosure. The method procedure is implemented based on the system architecture shown in FIG. 8. An NFSC device corresponds to the NFSC device 103 in FIG. 8, an NRF device corresponds to the NRF device 101 in FIG. 8, and an NFMF device corresponds to the NFMF device 105 in FIG. 8. On a basis that the NRF device has obtained service quality data of each NFS, the method procedure specifically includes the following steps.

Step 900: The NFMF device determines a service quality condition.

Specifically, the NFMF device may determine the service quality condition based on configuration information set by a user. To provide a basis for the user to set the service quality condition, the NFMF device may provide the user with service quality data of a plurality of NFSs in a network and/or an analysis result of the service quality data of a plurality of NFSs.

In a possible implementation, an NFQC device may further perform correlation analysis (to find a reason why service experience of an NFS is good or bad) based on consumption and use statuses of the plurality of NFSs (namely, service quality sample data that is obtained from each NFSC device). In addition, the NFQC device periodically reports any one or any combination of the following items to the NFMF device for visualized presentation: a result of the correlation analysis, a consumption and use statistical result of the NFS, and a consumption and use status or a consumption record of each NFS. Therefore, based on a visualized presentation result of the NFMF device, the user (for example, operation and maintenance personnel) may adjust or set configuration information related to the service quality condition (a service quality constraint condition or a service quality policy) of the NFS, so that the NFMF device may determine a corresponding service quality condition based on the configuration information. The visualized presentation herein means that information is presented on a human-machine interface of the NFMF device in a graphical manner. For example, at a moment, the user may find, by using the foregoing information presented by the NFMF device, that a quantity of NFS consumption failures on a network is excessively large, and the user may set, through a graphical interface, a command line interface, or a configuration file editing interface on the NFMF device, the configuration information related to the service quality condition as "selecting an NFS with highest success rate". Therefore, the NFMF device may determine the corresponding service quality condition as a service quality selection policy of "high average success rate first, TOP 1". At another moment, the user may find, by using the foregoing information presented by the NFMF device, that a delay of consuming the NFS in the network is excessively long, and then the user may set, through the graphical interface, the command line interface, or the configuration file editing interface on the NFMF device, the configuration information related to the service quality condition to "average consumption time<50 ms". Therefore, the NFMF device may determine that the service quality condition is a service quality constraint condition in which "average consumption time<50 ms".

It should be understood that the determined service quality conditions may be service quality conditions applicable to all NFSs, or may be service quality conditions differentiated by service types of NFSs. For details, refer to the description in step 901.

Step 901: The NFMF device sends the service quality condition to the NRF device.

Specifically, the NFMF device may send, to the NRF device, the service quality conditions applicable to all NFSs, or may send the service quality conditions differentiated by service types. Table 3 shows an example of differentiating service quality conditions by service types. It can be learned from the Table 3 that different service quality constraint conditions, different service quality selection policies, and even a service quality constraint condition and a service quality selection policy can be freely combined for using. It should be understood that this combination may also be used for the service quality conditions that are applicable to all NFSs and that are not differentiated based on service types.

**Table 3**

| Service type | Service quality condition | Service quality condition type |
|---|---|---|
| Service type 1 | A "high average success rate first, TOP 3" | A service quality selection policy in a form of "non-selected one" |
| Service type 2 | A "low average consumption time first, BOTTOM 2" | A Service quality selection policy in a form of "non-selected one" |
| Service type 3 | An "average success rate>95%" | A service quality constraint condition |
| Service type 4 | An "average consumption time<50 ms" | A service quality constraint condition |
| Service type 5 | An "average success rate>95%" and "average consumption time<50 ms" | A combination of a plurality of service quality constraint conditions |
| Service type 6 | A "high average success rate first, TOP 3, and then low average consumption time first, BOTTOM 1" | A service quality selection policy in a form of "select one", and combination of a plurality of policies |
| Service type 7 | A "high average success rate first, TOP 5, and average consumption time<150 ms" | A service quality selection policy in a form of "non-selected one", and combination of a selection policy and a constraint condition |
| Service type 8 | A "high average success rate first, TOP 1" | A service quality selection policy in a form of "select one" |
| Service type 9 | A "low average consumption time first, BOTTOM 1" | A service quality selection policy in a form of "select one" |

Optionally, the NFMF device may periodically send the service quality condition of the NFS to the NRF device. For example, the NRF device may send a subscription request about a service quality condition of one or more service types to the NFMF device before the step 901, namely, a service quality condition subscription request, and the subscription request may include a name or an identifier (indicating that the service quality condition corresponding to the one or more service types is subscribed to) of the one or more service types. Alternatively, the subscription request may not include the service types (indicating that service quality conditions of all NFSs are subscribed to), so that the NFMF device allocates a corresponding subscription resource (including but not limited to a task that is periodically executed, a CPU resource, a memory resource, or the like). Optionally, the subscription request message of the service quality condition may further include notification address information, and the notification address information is used by the NFMF device to send a subscription notification message that includes the service quality conditions to the NRF device. Once the NFMF device determines that the service quality condition of the one or more service types changes, the NFMF device sends the changed service quality condition of the one or more service types to the NRF device by sending a service quality condition subscription notification. In this way, the NFMF device periodically sends the service quality condition to the NRF device for a plurality of times. This manner helps the NRF device obtain, in a timelier manner, a latest service quality condition corresponding to each service type, so that the NRF device can select an NFS for the NFSC device in a timely manner based on settings of an operator or maintenance personnel or a change of another factor.

Optionally, the NFMF device may alternatively return, at a request of the NRF device, the service quality condition corresponding to the service type. For example, the NRF device may send a service quality condition request to the NFMF device before the step 901 (for example, after the NRF device receives a service query request of an NFS device). The request includes a name or an identifier of the one or more service types (indicating to request to obtain a service quality condition corresponding to the one or more service types), or may not include information about the service types (indicating to request to obtain service quality conditions of all NFSs). After receiving the request, the NFMF device parses out the name or the identifier of one or more service types from the request, reads the service quality condition corresponding to the one or more service types, and sends the corresponding service quality condition to the NRF device.

Optionally, regardless of whether the NFMF device performs sending periodically or performs sending at the request of the NRF device, the NFMF device may send a service quality condition of a service type to the NRF device once finding that the service quality condition of the service type changes (in this way, the NRF device may obtain a service quality condition of a corresponding service type in a more timely manner). Alternatively, service quality conditions of a plurality of service types may be sent to the NRF device at a time (in this way, a quantity of times of interaction between the NFMF device and the NRF device may be reduced).

Step 902: The NFSC device sends a service query request to the NRF device, where the service query request includes a service content condition.

This step is similar to the step 203.

Step 903: The NRF device selects an NFS based on the service content condition, the service quality condition, and service quality statistical data of each NFS.

This step is similar to the step 204.

Step 904: The NRF device returns a service query response to the NFSC device, where the service query response includes meta data information of the selected NFS.

This step is similar to the step 205.

Subsequent operations of the NFSC device are similar to those in the step 206 and the like.

In a possible implementation solution, in the foregoing steps 904, 703, and 205, in addition to the meta data information of the selected NFS, in the corresponding service query response, service quality data corresponding to each NFS may be further included (for example, the NRF device may be located outside an NFProfile in a service query response message, or in an NFProfile data structure in the service query response message, or an NFService data structure in the NFProfile data structure in the service query response message includes service quality data of the corresponding NFS). In this way, after receiving meta data information of a plurality of NFSs and corresponding service quality data, the NFSC device may select an NFS from the plurality of NFSs based on a locally stored or set service quality condition (the service quality selection policy or the service quality constraint condition described above). In this case, the service query request in the step 701 may alternatively not carry the service quality condition. In this way, some selection workload may be transferred from the NRF device to the NFSC device, so that load of the NRF device can be reduced, and the NFSC device can select an NFS based on a personalized requirement.

FIG. 10 is a diagram of still another system architecture that provides meta data information of an NFS according to an embodiment of this disclosure. The architecture integrates the architectures shown in FIG. 1, FIG. 3, and FIG. 8. Although only two NFSC devices and one NFSP device are included, it should be understood that, depending on an actual requirement, the architecture may include more NFSC devices and NFSP devices. To enable an NRF device 101 to provide meta data information of an NFS for an NFSC device (including a first NFSC device 1031) according to the method procedure corresponding to FIG. 2, each device in the architecture may perform the following procedure.
(1) A second NFSC device 1032 may provide service quality sample data for an NFQC device 102 according to the method procedure corresponding to FIG. 4, and the NFQC device 102 may receive service quality data or service quality sample data of each NFS from a plurality of NFSC devices (including the second NFSC device 1032), obtains service quality statistical data through statistics collection, and provides the service quality statistical data or the service quality data of each NFS to the NRF device 101 according to the method procedure corresponding to FIG. 4.
(2) An NFMF device 105 may provide service quality conditions of all NFSs or a service quality condition of each service type for the NRF device 101 according to the method procedure corresponding to FIG. 9.
(3) In addition to providing the service quality data of each NFS for the NRF device 101, the NFQC device 102 (for example, may be an NWDAF device) may further provide service quality data of the NFS and an analysis result of correlation analysis performed based on the service quality data for the NFMF device 105 according to the method procedure corresponding to FIG. 9. Therefore, a user of the NFMF device 105 may accordingly set configuration information related to the service quality condition. The NFMF device 105 determines the service quality condition based on the configuration information set by the user, and sends the service quality condition to the NRF device 101, so that the NRF device 101 searches for and selects an NFS according to the method procedure corresponding to FIG. 2.
(4) The first NFSC device 1031 obtains the meta data information of the NFS from the NRF device 101 according to the method procedure corresponding to FIG. 2, and the NRF device 101 selects an NFS according to the method procedure corresponding to FIG. 2, sends meta data information of the selected NFS to the first NFSC device 1031, enables the first NFSC device 1031 to access or consume the NFS provided by the NFSP device based on the received meta data information of the NFS.

In the system architecture, the NRF device 101 may receive both a service quality condition svrQosCri1 from the NFMF device 105 and a service quality condition svrQosCri2 from the first NFSC device 1031. In this case, in a process of selecting the NFS, the NRF device 101 may make a choice between the two service quality conditions. For example, the srvQosCril sent by the NFMF device 105 is used as a reference, and the svrQosCri2 sent by the first NFSC device 1031 is discarded. Alternatively, the srvQosCri2 sent by the first NFSC device may be used as a reference, and the svrQosCri1 sent by the NFMF device 105 may be discarded. Alternatively, the svrQosCri1 and the svrQosCri2 may be combined. For a combination manner of different service quality conditions, reference may be made to the example shown in Table 3.

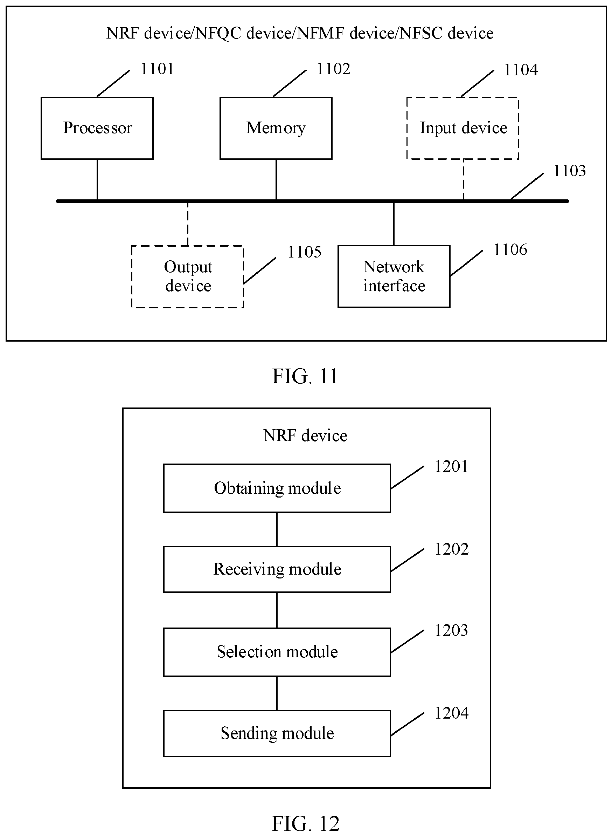

FIG. 11 is a diagram of a hardware structure of an NRF device, an NFQC device, an NFMF device, or an NFSC device according to an embodiment of this disclosure. All NRF devices (for example, 101 in FIG. 1 and 101 in FIG. 3), all NFQC devices (for example, 102 in FIG. 3), all NFMF devices (for example, 105 in FIG. 8), and all NFSC devices (for example, 103 in FIG. 1) in the embodiments of this disclosure may use general-purpose computer hardware shown in FIG. 11. The general-purpose computer hardware includes a processor 1101, a memory 1102, a bus 1103, an input device 1104, an output device 1105, and a network interface 1106. The input device 1104 and the output device 1105 are optional.

Specifically, the memory 1102 may include a computer storage medium in a form of a volatile and/or nonvolatile memory, for example, a read-only memory and/or a random access memory. The memory 1102 can store an operating system, an application program, another program module, executable code, and program data.

The input device 1104 may be configured to input information, so that a system administrator operates and manages the device, for example, configures a default service quality condition. The input device 1104 may be a keyboard or a pointing device, for example, a mouse, a trackball, a touchpad, a microphone, a joystick, a game pad, a satellite television antenna, a scanner, or the like. These input devices may be connected to the processor 1101 through the bus 1103.

The output device 1105 may be configured to output information, so that the system administrator operates and manages the device. The output device 1105 may be a monitor, or another peripheral output device, for example, a loudspeaker and/or a print device. These output devices may also be connected to the processor 1101 through the bus 1103.

The NRF device, the NFQC device, the NFMF device, or the NFSC device may be connected to a network through the network interface 1106, for example, connected to a local area network (Local Area Network, LAN). In a network connection environment, a computer-executable instruction stored in the device may be stored in a remote storage device, and is not limited to being locally stored.

For the NRF device, when the processor 1101 in the NRF device executes the executable code or the application program stored in the memory 1102, the NRF device may perform the method steps corresponding to the NRF device in all the foregoing embodiments, for example, the steps 201, 202, and 204. For a specific execution process, refer to the foregoing embodiments. Details are not described herein again.

For the NFQC device, when the processor 1101 in the NFQC device executes the executable code or the application program stored in the memory 1102, the NFQC device may perform the method steps corresponding to the NFQC device in all the foregoing embodiments, for example, the steps 404 and 405. For a specific execution process, refer to the foregoing embodiments. Details are not described herein again.

For the NFMF device, when the processor 1101 in the NFMF device executes the executable code or the application program stored in the memory 1102, the NFMF device may perform the method steps corresponding to the NFMF device in all the foregoing embodiments, for example, the step 901. For a specific execution process, refer to the foregoing embodiments. Details are not described herein again.

For the NFSC device, when the processor 1101 in the NFSC device executes the executable code or the application program stored in the memory 1102, the NFSC device may perform the method steps corresponding to the NFSC device in all the foregoing embodiments, for example, the steps 203, 206, 401, 402, 403, and 701. For a specific execution process, refer to the foregoing embodiments. Details are not described herein again.

FIG. 12 is a schematic diagram of a structure of an NRF device according to an embodiment of this disclosure. The NRF device includes an obtaining module 1201, a receiving module 1202, a selection module 1203, and a sending module 1204.

The obtaining module 1201 is configured to obtain service quality statistical data of m NFSs, where m is a positive integer, for example, obtain the service quality statistical data of the m NFSs from an NFQC device. For a specific execution process, refer to descriptions of the steps on an NRF device side in the foregoing embodiments, for example, the steps 201 and 405.

The receiving module 1202 is configured to receive a service query request from a first NFSC device, where the service query request includes a service content condition, the service content condition is used to describe a requirement of the first NFSC device for service content of a required NFS, and the service query request may be a service discovery request or a service subscription request. For a specific execution process, refer to descriptions of the steps on an NFSC device side in the foregoing embodiments, for example, the steps 203 and 204.

The selection module 1203 is configured to select n NFSs from the m NFSs based on the service content condition, service quality condition, and the service quality statistical data of the m NFSs, where the service quality condition is used to describe a requirement for service quality of the NFS, and n is a positive integer not greater than m. For example, the selection module 1203 first selects x NFSs from the m NFSs, where network function services provided by the x NFSs meet the service content condition, and x is a positive integer not greater than m, and selects n NFSs from the x NFSs based on a service quality factor that is obtained from an NFMF device and that is included in the service quality condition and that is preferentially referenced. For a specific execution process, refer to descriptions of the steps on the NRF device side in the foregoing embodiments, for example, the steps 903, 702, and 204.

The sending module 1204 is configured to return a service query response to the first NFSC device, where the service query response includes meta data information of the n NFSs, and the service query response may be a service discovery response or a service subscription notification. For a specific execution process, refer to descriptions of the steps on the NRF device side in the foregoing embodiments, for example, the steps 205, 703, and 904.

In this embodiment, the NRF device is presented in a form of the functional modules. The "module" herein may be an application-specific integrated circuit (ASIC), a circuit, a processor and a memory for executing one or more software or firmware programs, an integrated logic circuit, and/or another device that can provide the foregoing function. In a simple embodiment, a person skilled in the art may figure out that the NRF device may also be in a form shown in FIG. 11. The obtaining module 1201, the receiving module 1202, the selection module 1203, and the sending module 1204 may all be implemented by using the processor 1101 and the memory 1102 in FIG. 11. For example, a function of selecting the NFS by the selection module 1203 may be implemented by the processor 1101 by executing the code stored in the memory 1102.

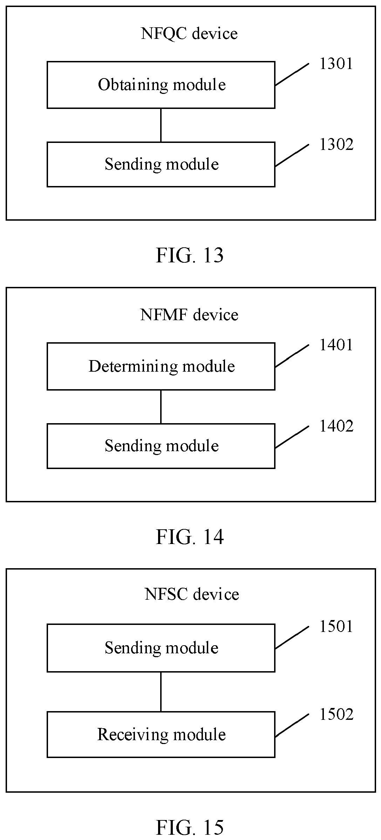

FIG. 13 is a schematic diagram of a structure of an NFQC device according to an embodiment of this disclosure. The NFQC device includes an obtaining module 1301 and a sending module 1302.

The obtaining module 1301 is configured to obtain service quality data of at least m NFSs from q NFSC devices, where q and m are positive integers. For a specific execution process, refer to descriptions of the steps on an NFQC device side in the foregoing embodiments, for example, the step 403 and 404.

The sending module 1302 is configured to send the service quality data of the m NFSs to an NRF device, so that the NRF device may provide meta data information of an NFS for an NFSC device based on the service quality data of the m NFSs. For a specific execution process, refer to the descriptions of the steps on the NFQC device side in the foregoing embodiments, for example, the step 405.

In this embodiment, the NFQC device is presented in a form of the functional modules. The "module" herein may be an application-specific integrated circuit (application-specific integrated circuit, ASIC), a circuit, a processor and a memory for executing one or more software or firmware programs, an integrated logic circuit, and/or another device that can provide the foregoing function. In a simple embodiment, a person skilled in the art may figure out that the NFQC device may also be in a form shown in FIG. 11. The obtaining module 1301 and the sending module 1302 may be implemented by using the processor 1101 and the memory 1102 in FIG. 11. For example, the function of obtaining the service quality data of the NFS by the obtaining module 1301 may be implemented by the processor 1101 by executing the code stored in the memory 1102.

FIG. 14 is a schematic diagram of a structure of an NFMF device according to an embodiment of this disclosure. The NFMF device includes a determining module 1401 and a sending module 1402.

The determining module 1401 is configured to determine a service quality condition, where the service quality condition is used to describe a requirement for service quality of an NFS. For example, the determining module 1401 may determine the service quality condition based on configuration information set by a user. For a specific execution process, refer to the descriptions of the steps on an NFMF device side in the foregoing embodiments, for example, the step 900.

The sending module 1402 is configured to send the service quality condition to an NRF device, so that the NRF device can provide meta data information of the NFS for a first NFSC device based on the service quality condition and service quality data that is of the NFS and that is obtained from a second NFSC device. For a specific execution process, refer to the descriptions of the steps on the NFMF device side in the foregoing embodiments, for example, the step 901.

In this embodiment, the NFMF device is presented in a form of the functional modules. The "module" herein may be an application-specific integrated circuit (ASIC), a circuit, a processor and a memory for executing one or more software or firmware programs, an integrated logic circuit, and/or another device that can provide the foregoing function. In a simple embodiment, a person skilled in the art may figure out that the NFMF device may also be in a form shown in FIG. 11. The determining module 1401 and the sending module 1402 may be implemented by using the processor 1101 and the memory 1102 in FIG. 11. For example, a function of obtaining the service quality condition by the determining module 1401 may be implemented by the processor 1101 by executing the code stored in the memory 1102.

FIG. 15 is a schematic diagram of a structure of an NFSC device. The NFSC device includes a sending module 1501 and a receiving module 1502.

The sending module 1501 is configured to send a service query request to an NRF device, where the service query request includes a service content condition and a service quality condition, the service content condition is used to describe a requirement of the NFSC device for service content of a required NFS, and the service quality condition is used to describe a requirement for service quality of the NFS. For a specific execution process, refer to the descriptions of the steps on an NFSC device side in the foregoing embodiments, for example, the step 701.

The receiving module 1502 is configured to receive a service query response from the NRF device, where the service query response includes meta data information of n NFSs, the n NFSs are selected by the NRF device based on the service content condition, the service quality condition, and service quality data that is of m NFSs and that is obtained from another NFSC device, and n is a positive integer not greater than m. For a specific execution process, refer to the descriptions of the steps on the NFSC device side in the foregoing embodiments, for example, the step 703.

In this embodiment, the NFSC device is presented in a form of the functional modules. The "module" herein may be an application-specific integrated circuit (ASIC), a circuit, a processor and a memory for executing one or more software or firmware programs, an integrated logic circuit, and/or another device that can provide the foregoing function. In a simple embodiment, a person skilled in the art may figure out that the NFSC device may also be in a form shown in FIG. 11. The sending module 1501 and the receiving module 1502 may be implemented by using the processor 1101 and the memory 1102 in FIG. 11. For example, a function of obtaining and sending the service query request by the sending module 1501 may be implemented by the processor 1101 by executing the code stored in the memory 1102.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the invention as long as such an implementation is encompassed within the scope of the claims.

It may be clearly understood by a person of ordinary skill in the art that, for ease and brief description, for a detailed working process of the foregoing system, apparatus and units, refer to a corresponding process in the foregoing method embodiments, and details are not described herein again.

In the several embodiments provided in this disclosure, it should be understood that the disclosed system, apparatus, and method may be implemented in other manners. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments in this disclosure.

In addition, functional units in the embodiments of this disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this disclosure essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this disclosure. The foregoing storage medium includes: any medium that can store program code, such as a removable hard disk, a read-only memory, a random access memory, a magnetic disk, or an optical disc.

The foregoing descriptions are merely specific background examples or embodiments of this present invention, but are not intended to limit the scope of the invention, which is defined by the appended claims.

## Claims

1. A method for providing meta data information of a network function service, wherein the method comprises:
obtaining (S202), by a network function repository function device (101), service quality data of m network function services;
receiving (S203, S701, S902), by the network function repository function device (101), a service query request from a first network function service consumer device (103), wherein the service query request comprises a service content condition, and the service content condition is used to describe a requirement of the first network function service consumer device (103) for service content of a required network function service;
selecting (S204, S702, S903), by the network function repository function device (101), n network function services from the m network function services based on the service content condition, a service quality condition, and the service quality data of the m network function services, wherein the service quality condition is used to describe a requirement on service quality of a network function service; and
returning (S205, S703, S904), by the network function repository function device (101), a service query response to the first network function service consumer device (103), wherein the service query response comprises meta data information of the n network function services, and the meta data information is a set of attribute information that describes a corresponding network function service or a set of attribute information that describes a network function instance that provides a corresponding network function service, the meta data information includes related information required for using a corresponding network function service,
that is, a protocol name and an IP address or a fully qualified domain name of the network function service or an IP address or a fully qualified domain name of an network function service provider device that provides the network function service,
wherein the selecting (S204, S702, S903), by the network function repository function device (101), the n network function services from the m network function services based on the service content condition, the service quality condition and the service quality data of the m network function services includes: selecting, by the network function repository function device (101), x network function services from the m network function services, where network function services provided by the x network function services meet the service content condition, and selecting, by the network function repository function device (101), the n network function services from the x network function services based on the service quality factor that is included in a service quality selection policy, or the selecting, by the network function repository function device, the n network function services from the m network function services based on the service content condition, the service quality condition and the service quality data of the m network function services includes
selecting, by the network function repository function device (101), the n network function services from the m network function services, where the n network function services meet the service content condition, and the service quality data of the n network function services meets a service quality constraint condition,
wherein
- before receiving (S203, S701, S902) the service query request, the network function repository function device (101) further receives (S901) the service quality condition from a network function management function device (105), or
- the service query request comprises the service quality condition, and the network function repository function device (101) obtains the service quality condition from the service query request.

2. The method according to claim 1, wherein the obtaining (S202), by the network function repository function device (101), the service quality data of the m network function services comprises:
receiving, by the network function repository function device (101), the service quality data of the m network function services from a network function quality collector device (102).

3. The method according to claim 2, wherein the receiving, by the network function repository function device (101), the service quality data of the m network function services from the network function quality collector device (102) comprises:
receiving, by the network function repository function device (101), a first subscription notification message from the network function quality collector device (102), wherein the first subscription notification message comprises service quality data of at least one network function service.

4. The method according to any one of claims 2 or 3, wherein the network function quality collector device (102) is a network data analysis function device

5. The method according to any one of claims 1 to 4, wherein before receiving (S901) the service quality condition from the network function management function device (105), the network function repository function device (101) further sends, to the network function management function device (105), a request message used to obtain the service quality condition

6. The method according to any one of claims 1 to 5, wherein the service quality condition is the service quality selection policy or the service quality constraint condition, the service quality selection policy comprises a service quality factor that is preferentially referenced when an network function service is selected, and the service quality constraint condition describes a condition that is met by service quality data of a target network function service.

7. The method according to claim 1, wherein the method further comprises:
obtaining, by a network function quality collector device (102), service quality data of at least m network function services from q second network function service consumer devices;
sending, by the network function quality collector device (102), the service quality data of the m network function services to a network function repository function device (101);
receiving, by the network function repository function device (101), the service quality data of the m network function services from the the network function quality collector device (102).

8. The method according to claim 7, wherein the sending, by the network function quality collector device (102), the service quality data of the m network function services to the network function repository function device (101) comprises:
sending, by the network function quality collector device (102), a first subscription notification message to the network function repository function device (101), wherein the first subscription notification message comprises service quality data of at least one network function service.

9. The method according to claim 8, wherein before the sending, by the network function quality collector device (102), the first subscription notification message to the network function repository function device (101), the method further comprises:
receiving, by the network function quality collector device (102), a first subscription request message from the network function repository function device (101), wherein the first subscription request message is used to indicate the network function quality collector device (102) to send the service quality data of the network function service to the network function repository function device (101).

10. The method according to any one of claims 7 to 9, wherein the network function quality collector device (102) is a network data analysis function device

11. The method according to claim 1, wherein the method further comprises:
determining (S900), by the network function management function device (105), the service quality condition; and
sending, by the network function management function device (105), the service quality condition to the network function repository function device (101);
receiving (S901), by the network function repository function device (101), the service quality condition from the network function management function device (105).

12. The method according to claim 11, wherein before the sending (S901), by the network function management function device (105), the service quality condition to the network function repository function device (101), the method further comprises:
receiving, by the network function management function device (105), a name or an identifier of a service type of the network function service from the network function repository function device (101).

13. The method according to claim 11, wherein the sending (S901), by the network function management function device (105), the service quality condition to the network function repository function device (101) comprises:
sending, by the network function management function device (105), a second subscription notification message to the network function repository function device (101), wherein the second subscription notification message comprises the service quality condition.

14. A network function repository function device (101) comprising a processor (1101) and a memory (1102), wherein
the memory memory (1102) is configured to store a program instruction; and
the processor (1101) is configured to invoke and execute the program instruction stored in the memory (1102), so that the network function repository function device (101) carries out the method according to any one of claims 1 to 6

15. A computer-readable storage medium, comprising instructions which, when executed by a computer, cause the computer to carry out the method of any one of claims 1 to 6

## Patentansprüche

1. Verfahren zur Bereitstellung von Metadateninformationen eines Netzwerkfunktionsdienstes, wobei das Verfahren Folgendes umfasst:
Erlangen (S202) von Dienstqualitätsdaten von m Netzwerkfunktionsdiensten durch eine Netzwerkfunktionsspeicherfunktionsvorrichtung (101);
Empfangen (S203, S701, S902) einer Dienstabfrageanforderung aus einer ersten Netzwerkfunktionsdienstverbrauchervorrichtung (103) durch die Netzwerkfunktionsspeicherfunktionsvorrichtung (101), wobei die Dienstabfrageanforderung eine Dienstinhaltsbedingung umfasst und die Dienstinhaltsbedingung verwendet wird, um eine Anforderung der ersten Netzwerkfunktionsspeicherfunktionsvorrichtung (103) für Dienstinhalte eines erforderlichen Netzwerkfunktionsdienstes zu beschreiben;
Auswählen (S204, S702, S903) von n Netzwerkfunktionsdiensten aus den m Netzwerkfunktionsdiensten durch die Netzwerkfunktionsspeicherfunktionsvorrichtung (101) basierend auf der Dienstinhaltsbedingung, einer Dienstqualitätsbedingung und den Dienstqualitätsdaten der m Netzwerkfunktionsdienste, wobei die Dienstqualitätsbedingung verwendet wird, um eine Anforderung an die Dienstqualität eines Netzwerkfunktionsdienstes zu beschreiben; und
Zurücksenden (S205, S703, S904) einer Dienstabfrageantwort durch die Netzwerkfunktionsspeicherfunktionsvorrichtung (101) an die erste Netzwerkfunktionsdienstverbrauchervorrichtung (103), wobei die Dienstabfrageantwort Metadateninformationen der n Netzwerkfunktionsdienste umfasst und die Metadateninformationen ein Satz von Attributinformationen, der einen entsprechenden Netzwerkfunktionsdienst beschreibt, oder ein Satz von Attributinformationen sind, der eine Netzwerkfunktionsinstanz beschreibt, die einen entsprechenden Netzwerkfunktionsdienst bereitstellt, die Metadateninformationen zugehörige Informationen beinhalten, die zur Verwendung eines entsprechenden Netzwerkfunktionsdienstes erforderlich sind,
das heißt, ein Protokollname und eine IP-Adresse oder ein vollständig qualifizierter Domänenname des Netzwerkfunktionsdienstes oder eine IP-Adresse oder ein vollständig qualifizierter Domänenname einer Netzwerkfunktionsdienstanbietervorrichtung, die den Netzwerkfunktionsdienst bereitstellt,
wobei das Auswählen (S204, S702, S903) der n Netzwerkfunktionsdienste aus den m Netzwerkfunktionsdiensten durch die Netzwerkfunktionsspeicherfunktionsvorrichtung (101) basierend auf der Dienstinhaltsbedingung, der Dienstqualitätsbedingung und den Dienstqualitätsdaten der m Netzwerkfunktionsdienste Folgendes beinhaltet: Auswählen von x Netzwerkfunktionsdiensten aus den m Netzwerkfunktionsdiensten durch die Netzwerkfunktionsspeicherfunktionsvorrichtung (101), wobei von den x Netzwerkfunktionsdiensten bereitgestellte Netzwerkfunktionsdienste die Dienstinhaltsbedingung erfüllen, und Auswählen der n Netzwerkfunktionsdienste aus den x Netzwerkfunktionsdiensten durch die Netzwerkfunktionsspeicherfunktionsvorrichtung (101) basierend auf dem Dienstqualitätsfaktor, der in einer Dienstqualitätsauswahlrichtlinie enthalten ist, oder wobei das Auswählen der n Netzwerkfunktionsdienste aus den m Netzwerkfunktionsdiensten durch die Netzwerkfunktionsspeicherfunktionsvorrichtung basierend auf der Dienstinhaltsbedingung, der Dienstqualitätsbedingung und den Dienstqualitätsdaten der m Netzwerkfunktionsdienste Auswählen der n Netzwerkfunktionsdienste aus den m Netzwerkfunktionsdiensten durch die Netzwerkfunktionsspeicherfunktionsvorrichtung (101) beinhaltet, wobei die n Netzwerkfunktionsdienste die Dienstinhaltsbedingung erfüllen und die Dienstqualitätsdaten der n Netzwerkfunktionsdienste eine Dienstqualitätsbeschränkungsbedingung erfüllen, wobei
- die Netzwerkfunktionsspeicherfunktionsvorrichtung (101) vor dem Empfangen (S203, S701, S902) der Dienstabfrageanforderung ferner die Dienstqualitätsbedingung aus einer Netzwerkfunktionsverwaltungsfunktionsvorrichtung (105) empfängt (S901), oder
- die Dienstabfrageanforderung die Dienstqualitätsbedingung umfasst und die Netzwerkfunktionsspeicherfunktionsvorrichtung (101) die Dienstqualitätsbedingung aus der Dienstabfrageanforderung erlangt.

2. Verfahren nach Anspruch 1, wobei das Erlangen (S202) der Dienstqualitätsdaten der m Netzwerkfunktionsdienste durch die Netzwerkfunktionsspeicherfunktionsvorrichtung (101) Folgendes umfasst:
Empfangen der Dienstqualitätsdaten der m Netzwerkfunktionsdienste aus einer Netzwerkfunktionsqualitätssammelvorrichtung (102) durch die Netzwerkfunktionsspeicherfunktionsvorrichtung (101).

3. Verfahren nach Anspruch 2, wobei das Empfangen der Dienstqualitätsdaten der m Netzwerkfunktionsdienste aus der Netzwerkfunktionsqualitätssammelvorrichtung (102) durch die Netzwerkfunktionsspeicherfunktionsvorrichtung (101) Folgendes umfasst:
Empfangen einer ersten Anmeldungsbenachrichtigungsmeldung aus der Netzwerkfunktionsqualitätssammelvorrichtung (102) durch die Netzwerkfunktionsspeicherfunktionsvorrichtung (101), wobei die erste Anmeldungsbenachrichtigungsmeldung Dienstqualitätsdaten von mindestens einem Netzwerkfunktionsdienst umfasst.

4. Verfahren nach einem der Ansprüche 2 oder 3, wobei die Netzwerkfunktionsqualitätssammelvorrichtung (102) eine Netzwerkdatenanalysefunktionsvorrichtung ist.

5. Verfahren nach einem der Ansprüche 1 bis 4, wobei die Netzwerkfunktionsspeicherfunktionsvorrichtung (101) vor dem Empfangen (S901) der Dienstqualitätsbedingung aus der Netzwerkfunktionsverwaltungsfunktionsvorrichtung (105) ferner eine Anforderungsmeldung, die zum Erlangen der Dienstqualitätsbedingung verwendet wird, an die Netzwerkfunktionsverwaltungsfunktionsvorrichtung (105) sendet.

6. Verfahren nach einem der Ansprüche 1 bis 5, wobei die Dienstqualitätsbedingung die Dienstqualitätsauswahlrichtlinie oder die Dienstqualitätsbeschränkungsbedingung ist, wobei die Dienstqualitätsauswahlrichtlinie einen Dienstqualitätsfaktor umfasst, auf den vorzugsweise Bezug genommen wird, wenn ein Netzwerkfunktionsdienst ausgewählt ist, und die Dienstqualitätsbeschränkungsbedingung eine Bedingung beschreibt, die von den Dienstqualitätsdaten eines Zielnetzwerkfunktionsdienstes erfüllt wird.

7. Verfahren nach Anspruch 1, wobei das Verfahren ferner Folgendes umfasst:
Erlangen von Dienstqualitätsdaten von mindestens m Netzwerkfunktionsdiensten aus q zweiten Netzwerkfunktionsdienstverbrauchervorrichtungen durch eine Netzwerkfunktionsqualitätssammelvorrichtung (102);
Senden der Dienstqualitätsdaten der m Netzwerkfunktionsdienste durch die Netzwerkfunktionsqualitätssammelvorrichtung (102) an eine Netzwerkfunktionsspeicherfunktionsvorrichtung (101);
Empfangen der Dienstqualitätsdaten der m Netzwerkfunktionsdienste aus der Netzwerkfunktionsqualitätssammelvorrichtung (102) durch die Netzwerkfunktionsspeicherfunktionsvorrichtung (101).

8. Verfahren nach Anspruch 7, wobei das Senden der Dienstqualitätsdaten der m Netzwerkfunktionsdienste durch die Netzwerkfunktionsqualitätssammelvorrichtung (102) an die Netzwerkfunktionsspeicherfunktionsvorrichtung (101) Folgendes umfasst:
Senden einer ersten Anmeldungsbenachrichtigungsmeldung durch die Netzwerkfunktionsqualitätssammelvorrichtung (102) an die Netzwerkfunktionsspeicherfunktionsvorrichtung (101), wobei die erste Anmeldungsbenachrichtigungsmeldung Dienstqualitätsdaten von mindestens einem Netzwerkfunktionsdienst umfasst.

9. Verfahren nach Anspruch 8, wobei das Verfahren vor dem Senden der ersten Anmeldungsbenachrichtigungsmeldung durch die Netzwerkfunktionsqualitätssammelvorrichtung (102) an die Netzwerkfunktionsspeicherfunktionsvorrichtung (101) ferner Folgendes umfasst:
Empfangen einer ersten Anmeldungsbenachrichtigungsmeldung aus der Netzwerkfunktionsspeicherfunktionsvorrichtung (101) durch die Netzwerkfunktionsqualitätssammelvorrichtung (102), wobei die erste Anmeldungsbenachrichtigungsmeldung verwendet wird, um anzugeben, dass die Netzwerkfunktionsqualitätssammelvorrichtung (102) die Dienstqualitätsdaten des Netzwerkfunktionsdienstes an die Netzwerkfunktionsspeicherfunktionsvorrichtung (101) sendet.

10. Verfahren nach einem der Ansprüche 7 bis 9, wobei die Netzwerkfunktionsqualitätssammelvorrichtung (102) eine Netzwerkdatenanalysefunktionsvorrichtung ist.

11. Verfahren nach Anspruch 1, wobei das Verfahren ferner Folgendes umfasst:
Bestimmen (S900) der Dienstqualitätsbedingung durch die Netzwerkfunktionsverwaltungsfunktionsvorrichtung (105); und
Senden der Dienstqualitätsbedingung durch die Netzwerkfunktionsverwaltungsfunktionsvorrichtung (105) an die Netzwerkfunktionsspeicherfunktionsvorrichtung (101);
Empfangen (S901) der Dienstqualitätsbedingung aus der Netzwerkfunktionsverwaltungsfunktionsvorrichtung (105) durch die Netzwerkfunktionsspeicherfunktionsvorrichtung (101).

12. Verfahren nach Anspruch 11, wobei das Verfahren vor dem Senden (S901) der Dienstqualitätsbedingung durch die Netzwerkfunktionsverwaltungsfunktionsvorrichtung (105) an die Netzwerkfunktionsspeicherfunktionsvorrichtung (101) ferner Folgendes umfasst:
Empfangen eines Namens oder einer Kennung eines Diensttyps des Netzwerkfunktionsdienstes aus der Netzwerkfunktionsspeicherfunktionsvorrichtung (101) durch die Netzwerkfunktionsverwaltungsfunktionsvorrichtung (105).

13. Verfahren nach Anspruch 11, wobei das Senden (S901) der Dienstqualitätsbedingung durch die Netzwerkfunktionsverwaltungsfunktionsvorrichtung (105) an die Netzwerkfunktionsspeicherfunktionsvorrichtung (101) Folgendes umfasst:
Senden einer zweiten Anmeldungsbenachrichtigungsmeldung durch die Netzwerkfunktionsverwaltungsfunktionsvorrichtung (105) an die Netzwerkfunktionsspeicherfunktionsvorrichtung (101), wobei die zweite Anmeldungsbenachrichtigungsmeldung die Dienstqualitätsbedingung umfasst.

14. Netzwerkfunktionsspeicherfunktionsvorrichtung (101), die einen Prozessor (1101) und einen Speicher (1102) umfasst, wobei
der Speicher (1102) dazu konfiguriert ist, eine Programmanweisung zu speichern; und
der Prozessor (1101) dazu konfiguriert ist, die in dem Speicher (1102) gespeicherte Programmanweisung aufzurufen und auszuführen, sodass die Netzwerkfunktionsspeicherfunktionsvorrichtung (101) das Verfahren nach einem der Ansprüche 1 bis 6 ausführt.

15. Computerlesbares Speichermedium, das Anweisungen umfasst, die bei ihrer Ausführung durch einen Computer bewirken, dass der Computer das Verfahren nach einem der Ansprüche 1 bis 6 ausführt.

## Revendications

1. Procédé pour la fourniture d'informations de métadonnées d'un service de fonctions de réseau, dans lequel le procédé comprend :
l'obtention (S202), par un dispositif de fonction de référentiel de fonctions de réseau (101), de données sur la qualité de service des services de fonctions de réseau ;
la réception (S203, S701, S902), par le dispositif de fonction de référentiel de fonctions de réseau (101), d'une demande d'informations sur le service provenant d'un premier dispositif consommateur de service de fonctions de réseau (103), dans lequel la demande d'informations sur le service comprend une condition de contenu de service, et la condition de contenu de service est utilisée pour décrire une exigence du premier dispositif consommateur de service de fonctions de réseau (103) pour le contenu de service d'un service de fonctions de réseau requis ;
la sélection (S204, S702, S903), par le dispositif de fonction de référentiel de fonctions de réseau (101), de services de fonctions de réseau n parmi les services de fonctions de réseau m sur la base de la condition de contenu de service, d'une condition de qualité de service et des données de qualité de service des services de fonctions de réseau m, dans lequel la condition de qualité de service est utilisée pour décrire une exigence relative à la qualité de service d'un service de fonctions de réseau ; et
le renvoi (S205, S703, S904), par le dispositif de fonction de référentiel de fonctions de réseau (101), d'une réponse à la demande d'informations sur le service au premier dispositif consommateur de service de fonctions de réseau (103), dans lequel la réponse à la demande d'informations sur le service comprend des informations de métadonnées des services de fonctions de réseau n, et les informations de métadonnées sont un ensemble d'informations d'attribut qui décrivent un service de fonctions de réseau correspondant ou un ensemble d'informations d'attribut qui décrit une instance de fonctions de réseau qui fournit un service de fonctions de réseau correspondant, les informations de métadonnées comportent des informations liées requises pour l'utilisation d'un service de fonctions de réseau correspondant,
c'est-à-dire, un nom de protocole et une adresse IP ou un nom de domaine complet du service de fonctions de réseau ou une adresse IP ou un nom de domaine complet d'un dispositif de fournisseur de service de fonctions de réseau qui fournit le service de fonctions de réseau,
dans lequel la sélection (S204, S702, S903), par le dispositif de fonction de référentiel de fonctions de réseau (101), des services de fonctions de réseau n parmi les services de fonctions de réseau m sur la base de la condition de contenu de service, de la condition de qualité de service et des données de qualité de service des services de fonctions de réseau m comporte : la sélection, par le dispositif de fonction de référentiel de fonctions de réseau (101), de services de fonctions de réseau x parmi les services de fonctions de réseau m, les services de fonctions de réseau fournis par les services de fonctions de réseau x satisfaisant à la condition de contenu de service, et la sélection, par le dispositif de fonction de référentiel de fonctions de réseau (101), des services de fonction de réseau n parmi les services de fonction de réseau x sur la base du facteur de qualité de service qui est inclus dans une politique de sélection de la qualité de service, ou la sélection, par le dispositif de fonction de référentiel de fonctions de réseau, des services de fonctions de réseau n parmi les services de fonctions de réseau m sur la base de la condition de contenu de service, de la condition de qualité de service et des données de qualité de service des services de fonctions de réseau m comporte la sélection, par le dispositif de fonction de référentiel de fonctions de réseau (101), des services de fonctions de réseau n parmi les services de fonctions de réseau m, les services de fonctions de réseau n satisfaisant à la condition de contenu de service et les données de qualité de service des services de fonctions de réseau n satisfaisant à une condition de contrainte de qualité de service,
dans lequel
- avant de recevoir (S203, S701, S902) la demande d'informations sur le service, le dispositif de fonction de référentiel de fonctions réseau (101) reçoit en outre (S901) la condition de qualité de service provenant d'un dispositif de fonction de gestion de fonctions de réseau (105), ou
- la demande d'informations sur le service comprend la condition de qualité de service, et le dispositif de fonction de référentiel de fonctions de réseau (101) obtient la condition de qualité de service à partir de la demande d'informations sur le service.

2. Procédé selon la revendication 1, dans lequel l'obtention (S202), par le dispositif de fonction de référentiel de fonctions de réseau (101), des données de qualité de service des services de fonctions de réseau m comprend :
la réception, par le dispositif de fonction de référentiel de fonctions de réseau (101), des données de qualité de service des services de fonctions de réseau m provenant d'un dispositif collecteur de qualité de fonctions de réseau (102).

3. Procédé selon la revendication 2, dans lequel la réception, par le dispositif de fonction de référentiel de fonctions de réseau (101), des données de qualité de service des services de fonctions de réseau m provenant du dispositif collecteur de qualité de fonctions de réseau (102) comprend :
la réception, par le dispositif de fonction de référentiel de fonctions de réseau (101), d'un premier message de notification d'abonnement provenant du dispositif collecteur de qualité de fonctions de réseau (102), dans lequel le premier message de notification d'abonnement comprend des données de qualité de service d'au moins un service de fonctions de réseau.

4. Procédé selon l'une quelconque des revendications 2 ou 3, dans lequel le dispositif collecteur de qualité de fonctions de réseau (102) est un dispositif de fonction d'analyse de données réseau.

5. Procédé selon l'une quelconque des revendications 1 à 4, dans lequel avant de recevoir (S901) la condition de qualité de service du dispositif de fonction de gestion de fonctions de réseau (105), le dispositif de fonction de référentiel de fonctions de réseau (101) envoie en outre au dispositif de fonction de gestion de fonctions de réseau (105), un message de demande utilisé pour obtenir la condition de qualité de service.

6. Procédé selon l'une quelconque des revendications 1 à 5, dans lequel la condition de qualité de service est la politique de sélection de qualité de service ou la condition de contrainte de qualité de service, la politique de sélection de qualité de service comprend un facteur de qualité de service référencé de préférence lorsqu'un service de fonctions de réseau est sélectionné, et la condition de contrainte de qualité de service décrit une condition qui est remplie par des données de qualité de service d'un service de fonctions de réseau cible.

7. Procédé selon la revendication 1, dans lequel le procédé comprend en outre :
l'obtention, par un dispositif collecteur de qualité de fonctions de réseau (102), de données de qualité de service d'au moins les services de fonctions de réseau m à partir des seconds dispositifs consommateurs de services de fonctions de réseau q ;
l'envoi, par le dispositif de fonction de référentiel de fonctions de réseau (102), des données de qualité de service des services de fonctions de réseau m à un dispositif de fonction de référentiel de fonctions de réseau (101) ;
la réception, par le dispositif de fonction de référentiel de fonctions de réseau (101), des données de qualité de service des services de fonctions de réseau m provenant du dispositif collecteur de qualité de fonctions de réseau (102).

8. Procédé selon la revendication 7, dans lequel l'envoi, par le dispositif collecteur de qualité de fonctions de réseau (102), des données de qualité de service des services de fonctions de réseau m au dispositif de fonction de référentiel de fonctions de réseau (101) comprend :
l'envoi, par le dispositif collecteur de qualité de fonctions de réseau (102), d'un premier message de notification d'abonnement au dispositif de fonction de référentiel de fonctions de réseau (101), dans lequel le premier message de notification d'abonnement comprend au moins un service de fonctions de réseau.

9. Procédé selon la revendication 8, dans lequel avant l'envoi, par le dispositif collecteur de qualité de fonctions de réseau (102), du premier message de notification d'abonnement au dispositif de fonction de référentiel de fonctions de réseau (101), le procédé comprend en outre :
la réception, par le dispositif collecteur de qualité de fonctions de réseau (102), d'un premier message de demande d'abonnement provenant du dispositif de fonction de référentiel de fonctions de réseau (101), dans lequel le premier message de demande d'abonnement est utilisé pour indiquer au dispositif collecteur de qualité de fonctions de réseau (102) d'envoyer les données de qualité de service du service de fonctions de réseau au dispositif de fonction de référentiel de fonctions de réseau (101) .

10. Procédé selon l'une quelconque des revendications 7 à 9, dans lequel le dispositif collecteur de qualité de fonctions de réseau (102) est un dispositif de fonction d'analyse de données réseau.

11. Procédé selon la revendication 1, dans lequel le procédé comprend en outre :
la détermination (S900), par le dispositif de fonction de gestion de fonctions de réseau (105), de la condition de qualité de service ; et
l'envoi, par le dispositif de fonction de gestion de fonctions de réseau (105), de la condition de qualité de service au dispositif de fonction de référentiel de fonctions de réseau (101) ;
la réception (S901), par le dispositif de fonction de référentiel de fonctions de réseau (101), de la condition de qualité de service provenant du dispositif de fonction de gestion de fonctions de réseau (105).

12. Procédé selon la revendication 11, dans lequel avant l'envoi (S901), par le dispositif de fonction de gestion de fonctions de réseau (105), de la condition de qualité de service au dispositif de fonction de référentiel de fonctions de réseau (101), le procédé comprend en outre :
la réception, par le dispositif de fonction de gestion de fonctions de réseau (105), d'un nom ou d'un identifiant d'un type de service du service de fonctions de réseau provenant du dispositif de fonction de référentiel de fonctions de réseau (101) .

13. Procédé selon la revendication 11, dans lequel l'envoi (S901), par le dispositif de fonction de gestion de fonctions de réseau (105), de la condition de qualité de service au dispositif de fonction de référentiel de fonctions de réseau (101), comprend :
l'envoi, par le dispositif de fonction de gestion de fonctions de réseau (105), d'un second message de notification d'abonnement au dispositif de fonction de référentiel de fonctions de réseau (101), dans lequel le second message de notification d'abonnement comprend la condition de qualité de service.

14. Dispositif de fonction de référentiel de fonctions de réseau (101) comprenant un processeur (1101) et une mémoire (1102), dans lequel
la mémoire (1102) est configurée pour stocker une instruction de programme ; et
le processeur (1101) est configuré pour invoquer et exécuter l'instruction du programme stocké dans la mémoire (1102), de sorte que le dispositif de fonction de référentiel de fonctions de réseau (101) exécute le procédé selon l'une quelconque des revendications 1 à 6.

15. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6.
